# EUROPÄISCHE PATENTANMELDUNG

(11) **EP 4 640 605 A1**
(43) Veröffentlichungstag der Anmeldung: **29.10.2025**
(21) Anmeldenummer: 25163187.5
(22) Anmeldetag: 12.03.2025
(51) Int. Cl.: B66B 5/00, H04W 4/90, H04W 76/50

(54) **VERFAHREN ZUM PRÜFEN EINER SPRACHNOTRUFEINRICHTUNG UND SPRACHBASIERTE DIALOGEINRICHTUNG**

(30) Priorität: 23.04.2024 DE 102024203792
(71) Anmelder: Robert Bosch GmbH, 70442 Stuttgart (DE)
(72) Erfinder: Trautner, Matthias, 99817 Eisenach (DE); Morgenstern, Rene, 63225 Langen (DE)

(57) **Zusammenfassung**

Die Erfindung betrifft ein Verfahren zum Prüfen einer Sprachnotrufeinrichtung (10), insbesondere einer Sprachnotrufeinrichtung (10) eines Aufzugs (12), wobei eine sprachbasierte Dialogeinrichtung (22), nach Initiierung eines Prüfanrufs über die Sprachnotrufeinrichtung (10) durch eine Prüfperson (16), eine Prüfung einer Funktionsfähigkeit der Sprachnotrufeinrichtung (10) durchführt. Ferner betrifft die Erfindung eine sprachbasierte Dialogeinrichtung (22) zum Prüfen einer Sprachnotrufeinrichtung (10), insbesondere einer Sprachnotrufeinrichtung (10) eines Aufzugs (12), wobei die sprachbasierte Dialogeinrichtung (22) ausgebildet ist, nach Initiierung eines Prüfanrufs über die Sprachnotrufeinrichtung (10) durch eine Prüfperson (16), eine Prüfung einer Funktionsfähigkeit der Sprachnotrufeinrichtung (10) durchzuführen. Die Erfindung betrifft zudem eine Notrufzentrale (18), ein Notrufsystem (28), ein Computerprogramm und ein maschinenlesbares Speichermedium.

## Beschreibung

### Stand der Technik

Die Erfindung betrifft ein Verfahren zum Prüfen einer Sprachnotrufeinrichtung, eine sprachbasierte Dialogeinrichtung, eine Notrufzentrale, ein Notrufsystem, ein Computerprogramm und ein maschinenlesbares Speichermedium.

Aus der US 2013 / 0272506 A1 ist ein Verfahren zum Testen eines Aufzugnotruftelefons bekannt, wobei das Aufzugsnotruftelefon entweder VoIPkompatibel ist und mit einem WAN verbunden ist oder mit einem mobilen Verbindungsmodul für den Betrieb in einem Mobilfunknetz ausgestattet ist, wobei eine Testanruffunktion von einer Überwachungszentrale initiiert wird, wenn über einen vorbestimmten Zeitraum keine Notrufe von dem Telefon abgegeben wurden.

### Offenbarung der Erfindung

### Vorteile der Erfindung

Das erfindungsgemäße Verfahren zum Prüfen einer Sprachnotrufeinrichtung, insbesondere einer Sprachnotrufeinrichtung eines Aufzugs, mit den Merkmalen des unabhängigen Anspruchs hat demgegenüber den Vorteil, dass durch die Integration eines Sprach-Bots in den Prozess der Testanrufbearbeitung eine effiziente und zuverlässige Lösung zur Prüfung der Sprachnotrufeinrichtung geschaffen wird. Durch die Integration des Sprach-Bots in Form der sprachbasierten Dialogeinrichtung in die Notrufzentrale wird eine standardisierte und fehlerfreie Bearbeitung der Prüfanrufe ermöglicht. Der Leitstellenmitarbeiter wird entlastet, was zu einer verbesserten Effizienz und Verfügbarkeit der Notrufzentrale für tatsächliche Notrufe führt und somit die Kundenbetreuung optimiert und die Arbeitsumgebung für den Leitstellenmitarbeiter verbessert. Der Sprach-Bot ermöglicht eine standardisierte und konsistente Bearbeitung der Prüfanrufe und minimiert mögliche Fehler. Insgesamt führt dies zu einer hohen Qualität der Prüfung der Sprachnotrufeinrichtung. Zusammengefasst ergeben sich die folgenden Vorteile:
Effizienzsteigerung: Vorzugsweise ist der Sprach-Bot ausgebildet, Prüfanrufe automatisch zu übernehmen, die erforderlichen Stammdaten abzugleichen und die Verbindungsqualität zu bewerten, ohne dass ein menschlicher Mitarbeiter eingreifen muss. Dies führt zu einer erheblichen Zeitersparnis und ermöglicht es den Mitarbeitern in der Notrufzentrale, sich auf andere wichtige Aufgaben zu konzentrieren.

Ressourcenoptimierung: Durch die automatisierte Bearbeitung der Prüfanrufe stehen Mitarbeiterkapazitäten in der Notrufzentrale zur Verfügung. Die Mitarbeiter können ihre Zeit effizienter nutzen und sich auf die Annahme und Bearbeitung echter Notrufe konzentrieren, was zu einer schnelleren Reaktionszeit und einer verbesserten Kundenbetreuung führt.

Kosteneinsparungen: Der Einsatz eines Sprach-Bots zur automatisierten Bearbeitung von Testanrufen trägt zu einer Kosteneinsparungen bei, da beispielsweise Schulungen für Mitarbeiter entfallen, die für die manuelle Bearbeitung der Testanrufe erforderlich wären.

Fehlerreduktion: Der Einsatz des Sprach-Bots können trägt dazu bei, Fehler bei der Prüfung der Sprachnotrufeinrichtung, beispielsweise durch sonst möglich menschliche Fehler, zu reduzieren, da der Sprach-Bot präzise und konsistent arbeitet, so dass die Genauigkeit der Prüfanrufbewertung und Prüfanrufdokumentation verbessert wird.

Verfügbarkeit: Vorteilhaft ist ferner, dass der Sprach-Bot rund um die Uhr einsatzbereit ist. Dies gewährleistet eine konstante Überwachung der Testanrufe und eine schnelle Reaktionszeit, unabhängig von der Uhrzeit oder Wochentag.

Skalierbarkeit: Bei Bedarf kann die Kapazität des Sprach-Bots leicht angepasst und insbesondere erweitert werden, um eine höhere Anzahl von Prüfanrufen zu bewältigen.

Vorteilhaft ist ein Verfahren, bei dem die sprachbasierte Dialogeinrichtung eingehende Notrufe sprachbasiert überwacht und bei Erkennung des Prüfanrufs die Prüfung der Funktionsfähigkeit der Sprachnotrufeinrichtung durchführt. Dies hat den Vorteil, dass Prüfanrufe direkt und ohne Eingreifen eines Leitstellenmitarbeiters durch die sprachbasierte Dialogeinrichtung bearbeitet werden können. Dies trägt zu einer Entlastung des Leitstellenmitarbeiters bei.

Besonders vorteilhaft ist ein Verfahren, bei dem die sprachbasierte Dialogeinrichtung bei einem Prüfanruf eine Gesprächsführung übernimmt und/oder die sprachbasierte Dialogeinrichtung bei der Gesprächsführung einen vorbestimmten Gesprächsablauf durchführt. Das systematische und immer gleich wiederkehrende Vorgehen trägt zu einer hohen Qualität der Prüfung der Sprachnotrufeinrichtung bei.

Vorteilhaft ist ferner ein Verfahren, bei dem die sprachbasierte Dialogeinrichtung eine Sprachqualität des Prüfanrufs ermittelt. Dies trägt vorteilhaft dazu bei, Fehler in der Sprachnotrufeinrichtung, beispielsweise ein defektes Mikrofon, zuverlässig zu erkennen.

Besonders vorteilhaft ist ein Verfahren, bei dem die sprachbasierte Dialogeinrichtung den Prüfanruf und/oder in Abhängigkeit des Prüfanrufs ermittelten Kennzahlen in einer Datenbank speichert.

Die Erfindung betrifft ferner eine sprachbasierte Dialogeinrichtung zum Prüfen einer Sprachnotrufeinrichtung, insbesondere einer Sprachnotrufeinrichtung eines Aufzugs, wobei die sprachbasierte Dialogeinrichtung ausgebildet ist, nach Initiierung eines Prüfanrufs über die Sprachnotrufeinrichtung durch eine Prüfperson, eine Prüfung einer Funktionsfähigkeit der Sprachnotrufeinrichtung durchzuführen. Vorzugsweise ist die sprachbasierte Dialogeinrichtung ausgebildet, eingehende Notrufe sprachbasiert zu überwachen und bei Erkennung des Prüfanrufs die Prüfung der Funktionsfähigkeit der Sprachnotrufeinrichtung durchzuführen. Insbesondere ist die sprachbasierte Dialogeinrichtung ausgebildet, bei einem Prüfanruf eine Gesprächsführung zu übernehmen und/oder einen vorbestimmten Gesprächsablauf durchzuführen. Vorzugsweise ist die die sprachbasierte Dialogeinrichtung ausgebildet ist, eine Sprachqualität des Prüfanrufs zu ermitteln und/oder den Prüfanruf und/oder in Abhängigkeit des Prüfanrufs ermittelten Kennzahlen in einer Datenbank zu speichern.

Die Erfindung betrifft ferner eine Notrufzentrale umfassend eine Leitstelleneinrichtung und die beschriebene sprachbasierte Dialogeinrichtung. Zudem umfasst die Erfindung ein Notrufsystem umfassend eine Notrufzentrale und eine Sprachnotrufeinrichtung. Ferner umfasst die Erfindung ein Computerprogramm zur Durchführung des beschriebenen Verfahrens und eine maschinenlesbares, insbesondere nichtflüchtiges, Speichermedium, auf dem das Computerprogramm gespeichert ist.

Die mit Bezug auf das Verfahrens beschriebenen Vorteile gelten entsprechend für die sprachbasierte Dialogeinrichtung, die Notrufzentrale, das Notrufsystem, das Computerprogramm und das Speichermedium.

Weitere Vorteile ergeben sich aus der nachfolgenden Beschreibung von Ausführungsbeispielen mit Bezug zu den Figuren und aus den abhängigen Ansprüchen.

### Kurze Beschreibung der Zeichnungen

Ausführungsbeispiele der Erfindung sind in den Zeichnungen anhand mehrerer Figuren dargestellt und in der nachfolgenden Beschreibung näher erläutert.

Es zeigen:
Fig. 1 ein Notrufsystem, und
Fig. 2 ein Ablaufdiagramm eines Verfahrens zum Prüfen einer Sprachnotrufeinrichtung.

### Beschreibung von Ausführungsbeispielen

Nachfolgend wird ein Verfahren zum Prüfen einer Sprachnotrufeinrichtung beschrieben, insbesondere einer Sprachnotrufeinrichtung eines Aufzugs, wobei eine sprachbasierte Dialogeinrichtung, nach Initiierung eines Prüfanrufs über die Sprachnotrufeinrichtung durch eine Prüfperson, eine Prüfung einer Funktionsfähigkeit der Sprachnotrufeinrichtung durchführt. Ferner wird eine sprachbasierte Dialogeinrichtung zum Prüfen einer Sprachnotrufeinrichtung beschrieben, insbesondere einer Sprachnotrufeinrichtung eines Aufzugs, wobei die sprachbasierte Dialogeinrichtung ausgebildet ist, nach Initiierung eines Prüfanrufs über die Sprachnotrufeinrichtung durch eine Prüfperson, eine Prüfung einer Funktionsfähigkeit der Sprachnotrufeinrichtung durchzuführen. Zudem wird eine Notrufzentrale, ein Notrufsystem, ein Computerprogramm und ein maschinenlesbares Speichermedium beschrieben.

Der Erfindung liegt die Norm EN 81-28 "Sicherheitsregeln für die Konstruktion und den Einbau von Aufzügen - Besondere Anforderungen an Personen- und Lastenaufzüge - Teil 28: Notrufsysteme" zugrunde. Gemäß der Norm EN 81-28 ist es erforderlich, das Notrufgerät regelmäßig überprüfen werden, um sicherzustellen, dass dieses ordnungsgemäß funktioniert. Die Norm EN 81-28 sieht hierfür vor, dass Prüfanrufe durchgeführt und dokumentiert werden müssen. Diese Prüfanrufe sind simulierte Notrufe, die den korrekten Betrieb des Notrufsystems überprüfen sollen. Dabei wird der Notruf in der Aufzugskabine von einer Prüfperson ausgelöst. Gemäß der genannten Norm ist die Frequenz der Prüfanrufe auf einmal pro Monat festgelegt.

Zur Erfüllung dieser Norm ist erfindungsgemäß vorgesehen, dass eine als Sprach-Bot ausgebildete sprachbasierte Dialogeinrichtung in die Notrufannahme in der Notrufzentrale integriert ist. Die sprachbasierte Dialogeinrichtung überwacht die Telefonate zwischen der Sprachnotrufeinrichtung und der Notrufzentrale. Bei Erkennung eines Prüfanrufs übernimmt die sprachbasierte Dialogeinrichtung die Gesprächsführung und folgt einem vordefinierten Gesprächspfad. Die sprachbasierte Dialogeinrichtung ist dabei ausgebildet, individuell auf Rückfragen zu antworten. Ferner dokumentiert die sprachbasierte Dialogeinrichtung den Prüfanruf automatisch, insbesondere in einer Datenbank. Der Leitstellenmitarbeiter der Notrufzentrale wird über die Alarmmanagement-Software der Notrufzentrale über die Übernahme des Prüfanrufs informiert und steht für weitere Notrufe zur Verfügung. Ferner ist dabei vorgesehen, dass der Sprach-Bot bei der Notrufannahme in der Notrufzentrale dem Telefonat zwischen der notrufauslösenden Prüfperson und der Notrufleistelle aktiv "Jauscht". Sobald der Sprach-Bot erkennt, dass es sich um einen Prüfanruf handelt, übernimmt er die Gesprächsführung mit der notrufauslösenden Prüfperson. Der Sprach-Bot folgt dabei dem vordefinierten Gesprächspfad, der speziell für Prüfanrufe konzipiert wurde. Dabei ist der Sprach-Bot in der Lage, auf Rückfragen der Prüfperson individuell zu antworten und beispielsweise die Frage zu beantworten: "Wie gut können Sie mich hören?". Der Sprach-Bot informiert den Leitstellenmitarbeiter in der Notrufzentrale über die Alarmmanagement Software und trennt das Gespräch mit ihm. Durch die automatische Dokumentation des Prüfanrufs ist sichergestellt, dass alle relevanten Informationen korrekt erfasst werden.

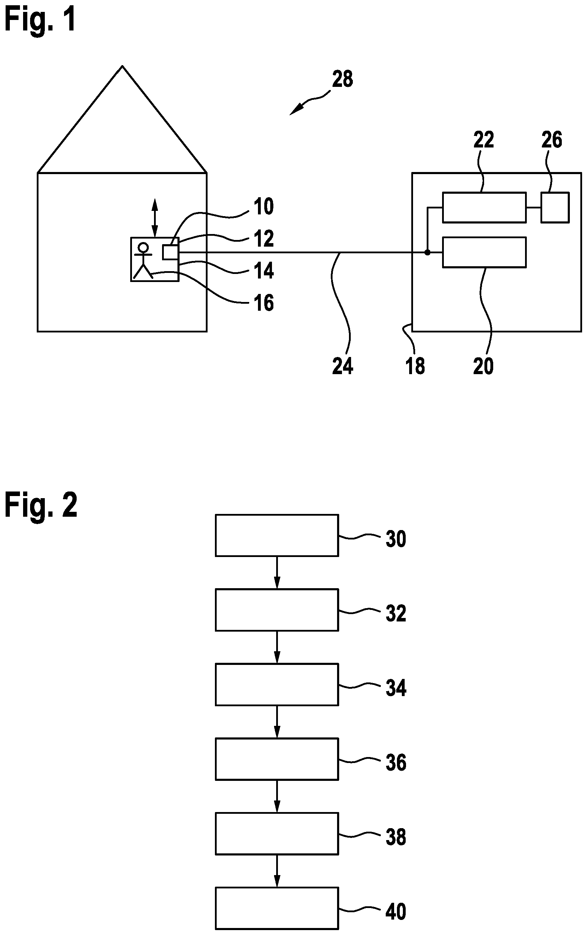

Figur 1 zeigt ein Notrufsystem 28. Das Notrufsystem 28 umfasst eine Notrufzentrale 18 zur Bearbeitung von Aufzugsnotrufen und eine Sprachnotrufeinrichtung 10. Die Sprachnotrufeinrichtung 10 ist in einer Kabine eines Aufzugs 12 angeordnet. Der Aufzug 12 ist in einem Gebäude 14 angeordnet, um Personen von einem Stockwerk in ein weiteres Stockwerk des Gebäudes 14 im Wesentlichen vertikal zu befördern. Die Sprachnotrufeinrichtung 10 dient zum Auslösen eines Notrufes in dem Aufzug 12.

Nach Auslösen des Notrufes stellt die Sprachnotrufeinrichtung 10 eine Sprechverbindung zwischen der Sprachnotrufeinrichtung 10 und der Notrufzentrale 18 her. Im bevorzugten Ausführungsbeispiel umfasst die Sprachnotrufeinrichtung 10 einen Schalter zum Auslösen des Notrufes, ein Mikrofon, einen Lautsprecher und eine Kommunikationseinheit zum Aufbauen der Sprechverbindung zu der Notrufzentrale 18. Die Notrufzentrale 18 umfasst eine Leitstelleneinrichtung 20 und eine sprachbasierte Dialogeinrichtung 22. Zusätzlich umfasst die Leitstelleneinrichtung 20 eine Datenbank 26. Die Leistelleneinrichtung 20 ist ausgebildet, den Notruf entgegenzunehmen und eine Sprechverbindung von einem Leitstellenmitarbeiter zu der im Aufzug 12 den Notruf auslösenden Person herzustellen. Die sprachbasierte Dialogeinrichtung 22 ist als Sprach-Bot ausgebildet. Dabei ist die sprachbasierte Dialogeinrichtung 22 ausgebildet, die Sprachnotrufeinrichtung 10 im Aufzug 12 zu prüfen. Hierfür ist die sprachbasierte Dialogeinrichtung 22 ausgebildet ist, nach Initiierung eines Prüfanrufs über die Sprachnotrufeinrichtung 10 im Aufzug 12 durch eine Prüfperson 16, eine Funktionsfähigkeit der Sprachnotrufeinrichtung 10 zu prüfen. Im bevorzugten Ausführungsbeispiel ist die sprachbasierte Dialogeinrichtung 22 dabei ausgebildet, eingehende Notrufe sprachbasiert zu überwachen und bei Erkennung des Prüfanrufs die Prüfung der Funktionsfähigkeit der Sprachnotrufeinrichtung 10 durchzuführen. Zur Durchführung der Prüfung der Sprachnotrufeinrichtung 10 ist die sprachbasierte Dialogeinrichtung 22 im bevorzugten Ausführungsbeispiel ausgebildet, bei einem Prüfanruf eine Gesprächsführung zu übernehmen und alternativ oder zusätzlich einen vorbestimmten Gesprächsablauf durchzuführen. Beispielsweise führt die sprachbasierte Dialogeinrichtung 22 die Prüfperson 16 durch Stellung von Fragen und/oder Anweisung durch den Prüfvorgang, wie beispielsweise "Ist dies eine Prüfung des Aufzugsnotrufs?",
"Ist die Sprachnotrufeinrichtung unbeschädigt?",
"Bitte lesen Sie die Anweisung auf der Sprachnotrufeinrichtung vor.",
"Wie ist die Qualität der Sprachwiedergabe?" und/oder
"Die Prüfung der Sprachnotrufeinrichtung dieses Aufzugs ist damit abgeschlossen.". Im bevorzugten Ausführungsbeispiel ist die sprachbasierte Dialogeinrichtung 22 ausgebildet, eine Sprachqualität des Prüfanrufs zu ermitteln. Vorzugsweise ermittelt die sprachbasierte Dialogeinrichtung 22 hierfür die Lautstärke und/oder das RauschSignal-Verhältnis und/oder die Verständlichkeit der durch die Prüfperson 16 gesprochenen Sprache. Ferner ist die sprachbasierte Dialogeinrichtung 22 ausgebildet, Kennzahlen des Prüfanrufs zu ermitteln. Insbesondere umfassen die Kennzahlen das Datum des Prüfanrufs und/oder die Uhrzeit des Prüfanrufs und/oder die Dauer des Prüfanrufs und/oder die Anschrift des Gebäudes 14 und/oder die Nummer des Aufzugs 12 und/oder den Namen des Prüfperson 16 und/oder Defekte der Sprachnotrufeinrichtung 10 und/oder die ermittelte Sprachqualität des Prüfanrufs und/oder ein Prüfergebnis (bestanden/durchgefallen). Dabei ist die sprachbasierte Dialogeinrichtung 22 im bevorzugten Ausführungsbeispiel ausgebildet, die Kennzahlen des Prüfanrufs in der Datenbank 26 zu speichern. Die Sprachnotrufeinrichtung 10 ist über eine Kommunikationsverbindung 24 mit der Notrufzentrale 18 zur Übertragung von Daten und/oder Sprachsignalen verbunden. Die Kommunikationsverbindung 24 ist dabei als drahtgebundene Kommunikationsverbindung 24, beispielsweise eine Telefonverbindung, und/oder als drahtlose Kommunikationsverbindung 24, beispielsweise als eine Mobilfunkverbindung, ausgebildet. Das Notrufsystem 28 ist ausgebildet, das nachfolgend mit Bezug auf die Figur 2 beschriebene Verfahren auszuführen. Vorzugsweise ist das beschriebene Verfahren in Form eines Computerprogramm ausgebildet, wobei das Computerprogramm auf einem
Mikroprozessor mit einem Speicher ausgeführt wird. Insbesondere ist der Mikroprozessor mit Speicher und dem Computerprogramm in der sprachbasierten Dialogeinrichtung 22 angeordnet. Vorzugsweise ist das Computergramm auf einem nichtflüchtigen, maschinenlesbaren Speichermedium, insbesondere auf dem Speicher des Mikroprozessors, gespeichert.

Figur 2 zeigt ein Ablaufdiagramm eines Verfahrens zum Prüfen einer Sprachnotrufeinrichtung, insbesondere der mit Bezug auf die Figur 1 beschriebenen Sprachnotrufeinrichtung. In einem ersten Verfahrensschritt 30 überwacht die sprachbasierte Dialogeinrichtung Gespräche zwischen einer Sprachnotrufeinrichtung und einer Notrufzentrale. Um einen Prüfanruf zu erkennen, ist die sprachbasierte Dialogeinrichtung ausgebildet, fortlaufend die Sprechverbindungen zwischen den Sprachnotrufeinrichtungen und der Leitstelleneinrichtung mitzuhören. Die sprachbasierte Dialogeinrichtung weist hierfür eine computerimplementierte Spracherkennung auf. Die sprachbasierte Dialogeinrichtung sucht dabei beispielsweise nach bestimmten Schlüsselwörtern, wie "Prüfanruf" und/oder "Test". Im zweiten Verfahrensschritt 32 erkennt die sprachbasierte Dialogeinrichtung, dass ein Prüfanruf durchgeführt wird, beispielsweise, weil ein vermeintlicher Notruf eingeht, aber die Prüfperson das Schlüsselwort "Prüfanruf" nennt. Nach Erkennung eines Prüfanrufs wird der dritte Verfahrensschritt 34 durchgeführt und die Prüfung der Funktionsfähigkeit der Sprachnotrufeinrichtung durchgeführt. Dabei übernimmt die sprachbasierte Dialogeinrichtung die Gesprächsführung anstatt dem Mitarbeiter der Leitstelleneinrichtung und führt einen vorbestimmten, mit Bezug auf die Figur 1 beschriebenen, Gesprächsablauf durch. Ferner ermittelt die sprachbasierte Dialogeinrichtung im vierten Verfahrensschritt 36 die Sprachqualität des Prüfanrufs und ermittelt eine Kennzahl, beispielsweise eine Kennzahl zwischen 0 und 10, wobei 0 kennzeichnet, dass keine Sprechverbindung vorlag und 10, dass eine optimale Sprechverbindung vorliegt. In einem fünften Verfahrensschritt 38 werden die Kennzahlen des Prüfanrufs, beispielsweise das Datum und/oder die Uhrzeit und/oder das Prüfergebnis "bestanden/durchgefallen", ermittelt. Im sechsten Verfahrensschritt 40 werden die im vierten Verfahrensschritt 36 und im fünften Verfahrensschritt 38 ermittelten Kennzahlen in einer Datenbank zur Dokumentation des Prüfanrufs gespeichert.

## Patentansprüche

1. Verfahren zum Prüfen einer Sprachnotrufeinrichtung (10), insbesondere einer Sprachnotrufeinrichtung (10) eines Aufzugs (12),
**dadurch gekennzeichnet, dass**
eine sprachbasierte Dialogeinrichtung (22), nach Initiierung eines Prüfanrufs über die Sprachnotrufeinrichtung (10) durch eine Prüfperson (16), eine Prüfung einer Funktionsfähigkeit der Sprachnotrufeinrichtung (10) durchführt.

2. Verfahren nach Anspruch 1,
**dadurch gekennzeichnet, dass**
die sprachbasierte Dialogeinrichtung (22) eingehende Notrufe sprachbasiert überwacht und bei Erkennung des Prüfanrufs die Prüfung der Funktionsfähigkeit der Sprachnotrufeinrichtung (10) durchführt.

3. Verfahren nach einem der vorhergehenden Ansprüche,
**dadurch gekennzeichnet, dass**
die sprachbasierte Dialogeinrichtung (22) bei einem Prüfanruf eine Gesprächsführung übernimmt.

4. Verfahren nach Anspruch 3,
**dadurch gekennzeichnet, dass**
die sprachbasierte Dialogeinrichtung (22) bei der Gesprächsführung einen vorbestimmten Gesprächsablauf durchführt.

5. Verfahren nach einem der vorhergehenden Ansprüche,
**dadurch gekennzeichnet, dass**
die sprachbasierte Dialogeinrichtung (22) eine Sprachqualität des Prüfanrufs ermittelt.

6. Verfahren nach einem der vorhergehenden Ansprüche,
**dadurch gekennzeichnet, dass**
die sprachbasierte Dialogeinrichtung (22) den Prüfanruf und/oder in Abhängigkeit des Prüfanrufs ermittelte Kennzahlen in einer Datenbank (26) speichert.

7. Sprachbasierte Dialogeinrichtung (22) zum Prüfen einer Sprachnotrufeinrichtung (10), insbesondere einer Sprachnotrufeinrichtung (10) eines Aufzugs (12), **dadurch gekennzeichnet, dass**
die sprachbasierte Dialogeinrichtung (22) ausgebildet ist, nach Initiierung eines Prüfanrufs über die Sprachnotrufeinrichtung (10) durch eine Prüfperson (16), eine Prüfung einer Funktionsfähigkeit der Sprachnotrufeinrichtung (10) durchzuführen.

8. Sprachbasierte Dialogeinrichtung (22) nach Anspruch 7,
**dadurch gekennzeichnet, dass**
die sprachbasierte Dialogeinrichtung (22) ausgebildet ist, eingehende Notrufe sprachbasiert zu überwachen und bei Erkennung des Prüfanrufs die Prüfung der Funktionsfähigkeit der Sprachnotrufeinrichtung (10) durchzuführen.

9. Sprachbasierte Dialogeinrichtung (22) nach einem der Ansprüche 7 oder 8,
**dadurch gekennzeichnet, dass**
die sprachbasierte Dialogeinrichtung (22) ausgebildet ist, bei einem Prüfanruf eine Gesprächsführung zu übernehmen und/oder einen vorbestimmten Gesprächsablauf durchzuführen.

10. Sprachbasierte Dialogeinrichtung (22) nach einem der Ansprüche 7 bis 9,
**dadurch gekennzeichnet, dass**
die sprachbasierte Dialogeinrichtung (22) ausgebildet ist, eine Sprachqualität des Prüfanrufs zu ermitteln.

11. Sprachbasierte Dialogeinrichtung (22) nach einem der Ansprüche 7 bis 10,
**dadurch gekennzeichnet, dass**
die sprachbasierte Dialogeinrichtung (22) ausgebildet ist, den Prüfanruf und/oder in Abhängigkeit des Prüfanrufs ermittelte Kennzahlen in einer Datenbank (26) zu speichern.

12. Notrufzentrale (18) umfassend eine Leitstelleneinrichtung (20), wobei die Leitstelleneinrichtung (20) ausgebildet ist, Notrufe von einer oder mehreren Sprachnotrufeinrichtungen (10) entgegenzunehmen, insbesondere von Sprachnotrufeinrichtungen (10) von Aufzügen (12),
**dadurch gekennzeichnet, dass**
die Notrufzentrale (18) eine sprachbasierte Dialogeinrichtung (22) nach einem der Ansprüche 7 bis 11 umfasst.

13. Notrufsystem (28) umfassend eine Notrufzentrale (18), insbesondere eine Notrufzentrale (18) nach Anspruch 12, und zumindest eine Sprachnotrufeinrichtung (10), insbesondere zumindest eine Sprachnotrufeinrichtung (10) eines Aufzugs (12),
**dadurch gekennzeichnet, dass**
das Notrufsystem (28) ausgebildet ist, das Verfahren nach einem der Ansprüche 1 bis 6 auszuführen.

14. Computerprogramm, welches eingerichtet ist, alle Schritte des Verfahrens nach einem der Ansprüche 1 bis 6 auszuführen.

15. Maschinenlesbares Speichermedium, insbesondere nichtflüchtiges maschinenlesbares Speichermedium, auf dem das Computerprogramm nach Anspruch 14 gespeichert ist.
